# EUROPEAN PATENT SPECIFICATION

(11) **EP 4 159 558 B1**
(45) Date of publication and mention of the grant of the patent: **29.05.2024**
(21) Application number: 21199881.0
(22) Date of filing: 29.09.2021
(51) Int. Cl.: B60T 7/04, G05G 5/03

(54) **FOOT BRAKE DEVICE FOR VEHICLES**
FUSSBREMSVORRICHTUNG FÜR FAHRZEUGE
DISPOSITIF DE FREIN AU PIED POUR VÉHICULES

(43) Date of publication of application: 05.04.2023
(73) Proprietor: KNORR-BREMSE Systeme für Nutzfahrzeuge GmbH, 80809 München (DE)
(72) Inventor: BIRKAS, Balazs Viktor, 1115 Budapest (HU); NEMETH, Huba, 1116 Budapest (HU); FOJTYIK, Gabor, 2091 Etyek (HU)

(56) References cited:
- EP-A2- 0 974 886
- WO-A1-01/40038
- DE-A1-102007 009 563
- US-A1- 2005 046 273
- US-A1- 2020 353 908

## Description

The invention relates to a foot brake device for vehicles, particularly utility vehicles or commercial vehicles, to a brake system for vehicles comprising such a foot brake device, and to a vehicle comprising such a foot brake device and/or such a brake system.

Utility vehicles or commercial vehicles typically comprise two brake systems for safety and redundancy reasons. Therein, the first brake system typically is the primarily used, main system, whereas the second brake system serves as a back-up system for use in case of failure of the first system. Typically, the first brake system is a substantially electrically or electronically controlled system, whereas the second brake system is a substantially fluidic, in particular pneumatic, controlled system, both systems being connected to a foot brake pedal which is activated by the driver of the vehicle for braking the vehicle. As an example, an electronic brake system (EBS) can be mentioned.

In normal operation, activation of the foot brake pedal by the driver operates the electronic first brake system which, e.g. by a foot brake sensor, generates an electronic signal as a first control or switching signal. This signal (e.g. a certain electric voltage) indicates the degree of activation of the foot brake pedal by the driver and thus the amount of deceleration of the vehicle intended by the driver. This first signal is received by an electronic control device, which, in turn, generates a further electronic signal. This latter signal is then fed into brake valves and/or brake actuators, which eventually generate a pneumatic pressure, i.e. the actual brake pressure being applied to and actuating the brakes of the vehicle.

In case that this electronic first brake system is inoperative or does not operate correctly or fails for whatever reason, the second, pneumatic brake system steps in as a back-up system for safely braking the vehicle. Therein, activation of the foot brake pedal by the driver generates a pneumatic signal as a second control or switching signal. This signal is a control pressure signal which is fed into brake valves and/or brake actuators which eventually generate a pneumatic pressure according to the second control signal. Said generated pneumatic pressure is the actual brake pressure being applied to and actuating the brakes of the vehicle as intended by the vehicle driver.

Typically, pneumatic means that are provided to operate the second, pneumatic brake system in particular to generate the second control signal also serve the additional function to provide a pneumatic resistance or counter force or counter pressure in the foot brake pedal which is depressed by the driver for braking the vehicle. Therein, typically, the pneumatic resistance or counter force or pedal force increases with the amount or degree of activation or depression of the foot brake pedal, i.e. the pedal stroke, by the driver. Thus, the pneumatic resistance or counter force indicates the amount or strength or degree of braking the vehicle as intended by the driver. Accordingly, the driver has a certain feeling or impression when activating, i.e. engaging or depressing and disengaging or releasing, the foot brake pedal.

The brake system or the electronic brake system (EBS), respectively, can combine the electronic first brake system and the pneumatic second brake system and/or let these brake systems cooperate such that the brake actuators can process both the first, electronic control signal and/or the second, pneumatic control signal.

Under environmental, economical or other aspects, it may be intended to provide a purely or substantially electrical or electronic brake system in vehicles, particularly utility vehicles or commercial vehicles. In this case, the above-mentioned second, pneumatic brake system would be omitted. This may be a beneficial, preferred solution for purely or partly electrical vehicles. Electrical vehicles may no longer have a compressor and/or related devices on board for generating and conducting pressurized air that is needed for controlling and/or operating a pneumatic brake system. However, it is noted that also electrical vehicles may still have devices for generating and conducting pressurized air on board. Also for more or less conventional vehicles it may be preferred to provide a purely or substantially electrical or electronic or electromechanical brake system, i.e. no longer a pneumatic brake system. In this case, the brake elements may no longer be controlled and/or activated by pneumatic pressure, i.e. pressurized air. Instead, the brake actuators, e.g. servo motors, may be operated by electric signals, thereby e.g. moving brake pads towards or away from a brake disk. Besides, the omission of a pneumatically operated brake system may also be an option for a vehicle which is configured to drive partly or fully automated or autonomous.

Thus, if a pneumatic brake system and/or pneumatic devices for generating and handling pressurized air are no longer fully or partly provided in a vehicle, there is a need for alternative solutions to provide the above mentioned functions that were previously fulfilled by the pneumatic brake system and/or the related pneumatic devices in a vehicle. This includes the case that only the pneumatic control signal is no longer provided, whereas the brake system as such may still be operated pneumatically, including the brake actuators which exert the actual brake pressure.

US 2020/353908 A1 discloses a vehicle brake pedal with pedal resistance assembly and force/position sensor. US 2005/046273 A1 discloses a pedal simulator. WO 01/40038 A1 discloses a simulator for a non-hydraulic actuator system. DE 10 2007 009 563 A1 discloses a brake lever assembly. EP 0 974 886 A2 discloses a pedal mechanism.

In view of the aspect that a vehicle may no longer have means to operate the second, pneumatic brake system in particular to generate the pneumatic second control signal, it is an object of the present invention to accomplish non-pneumatic means which provide a resistance or counter force or counter pressure in the foot brake pedal which is depressed by the driver for braking the vehicle, wherein the amount or degree of such counter force informs the driver about the strength or degree of braking the vehicle as intended by the driver. Thus, a foot brake pedal shall be provided which can substantially be operated by the driver as usual, i.e. as the driver is accustomed to, although a pneumatic control signal is no longer provided for the foot brake pedal.

According to the present invention, this object is achieved by a foot brake device for vehicles, particularly utility vehicles or commercial vehicles, as defined by claim 1, by a brake system for vehicles as defined by claim 14, and by a vehicle, particularly a utility vehicle or commercial vehicle, as defined by claim 16.

Thus, the invention provides a foot brake device for vehicles, particularly utility vehicles or commercial vehicles, comprising: a foot brake pedal for activation by the driver of the vehicle, and a first foot brake sensor being coupled with the foot brake pedal, wherein the first foot brake sensor is configured to determine a respective position of the foot brake pedal upon activation of the foot brake pedal by the driver, and wherein the first foot brake sensor is configured to generate a first electric control signal corresponding to said position of the foot brake pedal, and at least one member which is configured to generate a physical counter force against which the foot brake pedal must work upon its activation by the driver, wherein the amount of said counter force is substantially proportional to the degree or amount of activation of the foot brake pedal by the driver and indicates the degree or amount of activation of the foot brake pedal to the driver.

According to the invention, the member which generates a physical counter force for the activation of the foot brake pedal is configured to give a kind of response or reaction to the driver informing him/her about the respective position or movement of the foot brake pedal upon its depression or release by the driver, thereby indicating the respective braking strength or braking power to the driver. Therein, said counter force or pedal force is no longer generated by pneumatic pressure, i.e. there is no pneumatic signal or pneumatic resistance or counter force when operating the foot brake pedal, as a pneumatic control signal is no longer provided by a pneumatic braking system and/or related pneumatic devices in the vehicle. Nevertheless, said counter force generating member is configured such that the driver has the same or a similar feeling and impression and handling of the foot brake pedal as with conventional foot brake pedals, i.e. there is no change in the driver's experience and his/her manner of operation of the vehicle brake. Accordingly, the foot brake pedal shall show a behavior as it is known by the driver from conventional foot brake pedals and to which behavior the driver is used. Thus, the driver does not have to specifically exercise or get accustomed to operate the foot brake device of the invention.

The member which generates a counter force for the foot brake pedal preferably has a characteristic such that the amount of the generated counter force is substantially linearly or non-linearly or irregularly proportional to the degree or amount of activation of the foot brake pedal by the driver. The term "proportional" as used in the context of this invention does not have to be understood only in its literal meaning. Rather, it shall be understood in a more general, broader sense and shall indicate any conceivable kind of a regular or irregular dependency or correspondence or ratio.

Specifically, the amount of the generated counter force, i.e. the strength with which the driver has to depress the foot brake pedal, can be substantially progressively or degressively proportional to the degree or amount of activation of the foot brake pedal. Herein, progressive proportionality means that the strength or force with which the driver has to depress the foot brake pedal does not increase linearly with the amount of activation or depression of the foot brake pedal, but rather increases with a higher rate as compared to the rate of activation of the foot brake pedal. In turn, degressive proportionality means that the strength or force to depress the foot brake pedal increases with a lower rate as compared to the rate of activation of the foot brake pedal. Furthermore, the amount of the generated counter force can be substantially directly or indirectly proportional to the degree of activation or depression of the foot brake pedal by the driver. Herein, direct proportionality means that the strength or force with which the driver has to depress the foot brake pedal increases with the amount of activation or depression of the foot brake pedal. In turn, indirect proportionality means that the strength or force to depress the foot brake pedal decreases with the amount of activation or depression of the foot brake pedal. It is to be understood that any of these regular or irregular proportionalities may also be combined, i.e. there may e.g. be a direct or indirect, progressive or degressive proportionality. Furthermore, during activation of the foot brake pedal by the driver, there may be different types and/or combinations of any of the above mentioned proportionalities over the time, i.e. over the process of activation of the foot brake pedal.

In a preferred embodiment of the invention, the at least one member which generates a counter force for the foot brake pedal may comprise a spring element and/or a damping element and/or another force generating element. Suitable spring elements may comprise a mechanical spring, particularly a spiral spring, a coil spring or a leaf spring. Spring elements may also comprise a gas pressure spring. Suitable damping elements may comprise a hydraulic damper or a rubber damper. Any other suitable force generating element may also be conceivable, such as e.g. active elements or electromechanical force generating elements.

These counter force generating members may be configured and arranged and may cooperate with the foot brake pedal and with each other, if applicable, in different ways. Therein, for example, at least two of a spring element and/or a damping element may be connected in series and/or in parallel with each other. This encompasses an arrangement where e.g. two of these elements are connected in parallel with each other and where this arrangement is then connected in series with one or more further of these elements which again may or may not be connected in parallel with each other.

In a further embodiment the foot brake pedal and the at least one spring element and/or the at least one damping element may be configured and arranged such that the foot brake pedal upon its activation by the driver contacts one or more of the at least one spring element and/or the at least one damping element only after the foot brake pedal has been moved for a predetermined distance. In this case, the foot brake pedal may first travel freely for a certain distance without experiencing any counter force prior to reaching and contacting the counter force generating element. In case of two or more counter force generating elements, which may e.g. be arranged substantially in parallel, the foot brake pedal may first travel freely for a certain distance only with respect to one or more of said elements, whereas the one or more other elements may immediately be contacted by the foot brake pedal as of the start position. Other or supplementary configurations or arrangements of and/or manners of cooperation between the foot brake pedal and the counter force generating members may also be conceivable.

In a foot brake device according to a preferred embodiment of the invention, two members for generating a counter force for the foot brake pedal are provided comprising a first spring element and a second spring element, these two spring elements having different characteristics and/or different physical properties and/or different geometries.

In this embodiment, the foot brake device comprises a housing, a piston being coupled with the foot brake pedal and being reciprocally movable within the housing in conjunction with the movement of the foot brake pedal, and at least a first spring element to generate a counter force for the foot brake pedal, the first spring element being arranged within the housing, the first spring element with its one end substantially bearing against the housing and with its other end substantially bearing against the piston.

Is to be noted that the element "piston" does not necessarily have to be understood literally and/or technically as a piston, particularly a fluidically sealing piston. Rather, any kind of displaceable or sliding actuation or actuator element can also be comprised by the term "piston".

This encompasses the embodiments that the first spring element either immediately and/or always contacts and bears against the piston, or that the first spring element is configured such that it bears against the piston with its respective other end only after the piston has been moved for a predetermined distance upon activation of the foot brake pedal by the driver. In this latter embodiment, there typically is a certain gap between the respective end of the first spring element and the piston in the relaxed, non-biased start position of the piston and the spring element. In this case, the piston, when being pushed by the foot brake pedal, first travels freely for the distance of said gap and only then enters into contact with the respective end of the first spring element and only then bears against and starts to compress the spring element. During said gap distance of free travel, the piston does not experience any counter force from the first spring element.

Furthermore, the foot brake device may comprise a second spring element to generate a counter force for the foot brake pedal, the second spring element being arranged within the housing, the second spring element with its one end substantially bearing against the housing and with its other end substantially bearing against the piston. As explained above for the first spring element, this may again encompass the embodiments that the second spring element either immediately and/or always contacts and bears against the piston, or that there is a certain gap between the respective end of the second spring element and the piston in the non-biased start position of the piston and the spring element. Accordingly, the second spring element is configured such that it bears against the piston with its respective end only after the piston has been moved over the gap distance upon activation of the foot brake pedal by the driver.

Furthermore, the first and second spring elements may be configured and arranged such that the first spring element has a larger cross section or diameter and the second spring element has a smaller cross section or diameter, wherein the second spring element is arranged substantially within the first spring element, i.e. the first spring element partly or fully encloses the second spring element. Besides, the first and second spring elements may have the same or different lengths. In the latter case, for example, the second spring element may have a longer axial length than the first spring element, so that the second spring element may at its one end or its both ends protrude axially from the first spring element. Besides, the first and second spring elements, in their arrangement within the housing, may axially be displaced against each other so that one spring element may protrude axially from the respective one end of the respective other spring element and vice-versa.

In preferred embodiments of the invention, the first spring element is a first coil spring, and the second spring element is either a second coil spring or a gas pressure spring.

In view of the above mentioned aspect that a pneumatic brake system and/or pneumatic devices for generating and handling pressurized air, specifically including the provision of a pneumatic, second control signal, may no longer be provided in a vehicle, there is a need for an alternative solution to provide those functions that were previously fulfilled by the secondary pneumatic brake system and/or the related pneumatic devices in a vehicle as regards the provision of a back-up system for safely braking the vehicle in case that the primary, substantially electric or electronic brake system is not operative or fails. Thus, there is a need to provide a secondary brake system which particularly is controlled non-pneumatically or non-fluidically.

To accomplish this secondary brake system, the foot brake device according to the invention comprises a second foot brake sensor being coupled with the foot brake pedal, wherein the second foot brake sensor is configured to determine a respective position of the foot brake pedal upon activation of the foot brake pedal by the driver, and wherein the second foot brake sensor is configured to generate a second electric control signal corresponding to said position of the foot brake pedal. Therein, the second foot brake sensor preferably is independent of the above mentioned first foot brake sensor and is in particular configured to operate as a back-up sensor in case of failure of the first foot brake sensor.

The first electric control signal generated by the first foot brake sensor and/or the second electric control signal generated by the second foot brake sensor are intended to eventually activate at least one brake actuator at or in the vicinity of the wheels of the vehicle to brake the vehicle in an amount corresponding to the degree of activation of the foot brake pedal by the driver. Therein, the generated first electric control signal and/or the generated second electric control signal as such can be applied and inputted more or less directly into the one or more brake actuators to activate the vehicle brakes for braking the vehicle in an amount corresponding to the degree of activation of the foot brake pedal by the driver.

According to the invention, electronic control devices or control units are provided and generally interconnected between the first and/or second foot brake sensors at the foot brake pedal and the brake actuators at the wheels of the vehicle. In this case, the foot brake device of the invention comprises at least a first electronic control device, wherein the first electric control signal generated by the first foot brake sensor is received by the first electronic control device, and wherein the first electronic control device is configured to generate a third electric control signal which activates at least one brake actuator to brake the vehicle in an amount or strength corresponding to the degree or amount of activation of the foot brake pedal by the driver.

As the above mentioned second foot brake sensor is provided in the context of a secondary back-up brake system, the foot brake device of the invention further comprises a second electronic control device, wherein the second electric control signal generated by the second foot brake sensor is received by the second electronic control device, and wherein the second electronic control device is configured to generate a fourth electric control signal which activates at least one brake actuator to brake the vehicle in an amount or strength corresponding to the degree or amount of activation of the foot brake pedal by the driver.

The above mentioned first and/or second foot brake sensors may operate under various physical or technical principles. Therefore, the first and/or second foot brake sensors can comprise magnetic and/or inductive and/or capacitive and/or optical sensor means to generate the first and/or second electric control signal. Other physical sensor means and methods may likewise be conceivable. Preferably, in the sense of functional safety or security, the first and second foot brake sensors as such each may use different sensor means or methods in order to accomplish the aim that the second foot brake sensor is a back-up sensor for the first foot brake sensor, thus e.g. coping with issues of potential systematic errors or failures of one of the two utilized sensing means or methods.

In a preferred embodiment of the invention, the first foot brake sensor and/or the second foot brake sensor comprises a Hall sensor which cooperates with a magnetic device to generate the first and/or second electric control signal. Herein, the Hall sensor produces a voltage difference across an electrical conductor that is transverse to an electric current in the conductor and to an applied magnetic field perpendicular to the current. Said voltage difference is indicative for the first and/or second electric control signal.

Furthermore, the invention also encompasses a brake system for vehicles, particularly utility vehicles or commercial vehicles, comprising a foot brake device as described above.

This brake system may additionally comprise an input interface for activation by the driver of the vehicle, said input interface being configured to enable additional driving and/or braking modes and/or braking means for the vehicle, particularly enabling a one pedal driving (OPD) mode and/or comprising a deceleration actuator, said one pedal driving mode and/or said deceleration actuator particularly enabling a permanent braking mode and/or a motor braking mode and/or a retardation mode for the vehicle.

Further options in this respect may be the provision of braking by means of an electric engine functioning as a generator; the provision of a retarder as a further braking device, wherein the input interface can comprise a retarder lever; and braking by normal friction brakes which however are activated and/or controlled by the above mentioned input interface. In case of one pedal driving, the input interface generally can comprise a driving pedal.

Furthermore, the invention also provides a vehicle comprising a foot brake device as described above and/or a brake system as described above. The vehicle of the invention can particularly be configured as a utility vehicle, a commercial vehicle, a truck, a trailer, a bus, a passenger car, and/or a combination of a towing vehicle and a trailer. Additionally or alternatively, the vehicle can be configured as an electric, hybrid, fuel cell, hydrogen or conventional vehicle.

Further details and advantages of the invention will be explained in the following detailed description of various embodiments of the invention in combination with the attached drawings.
Fig. 1 shows a cross-sectional view of a part of the foot brake device of the invention in a first embodiment;
Fig. 2 shows a cross-sectional view of a part of the foot brake device of the invention in a second embodiment;
Fig. 3 shows a circuitry diagram of the foot brake device of the invention.

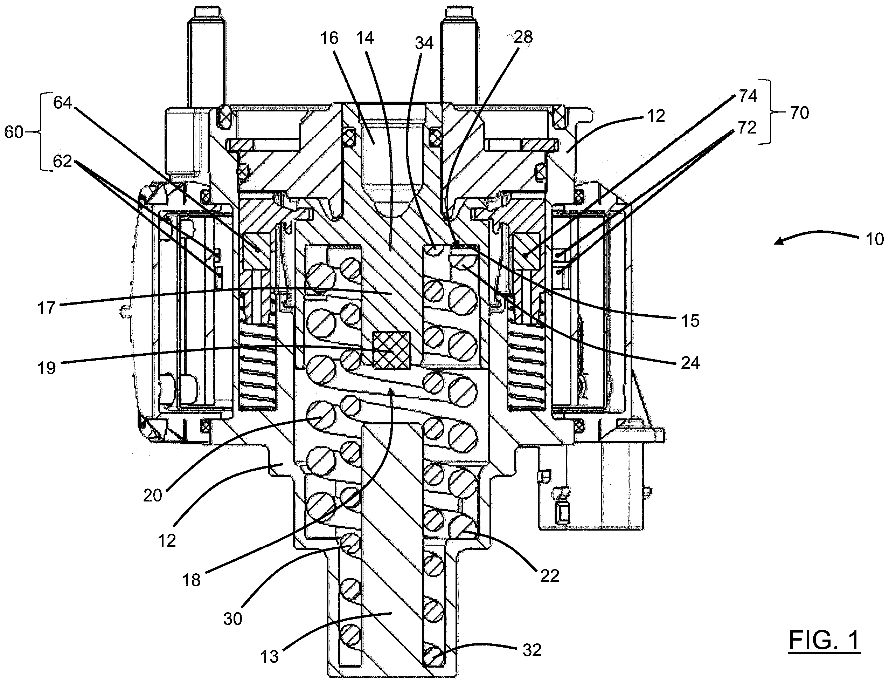

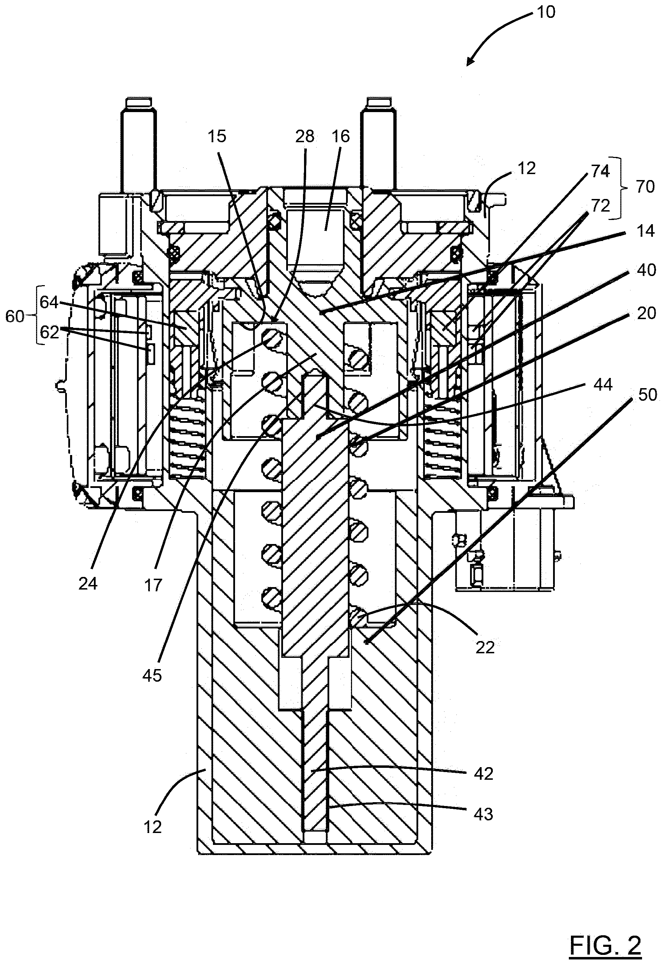

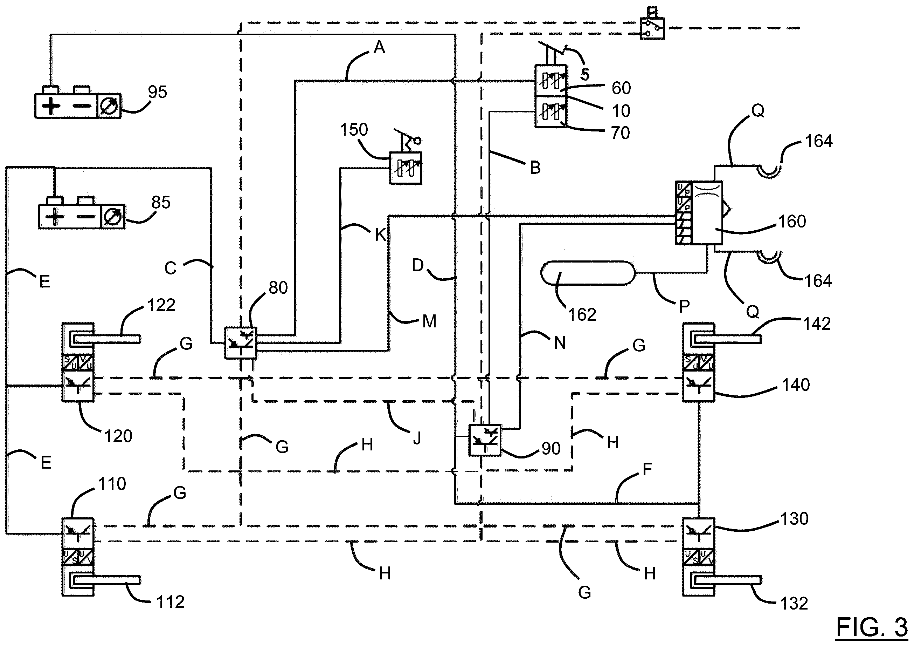

Figs. 1 and 2 both show a cross-sectional view of a part of a foot brake device, namely a foot brake module 10. Although being slightly different as to their dimensions and certain details that will be explained below, the foot brake modules 10 of Figs. 1 and 2 both comprise certain substantially identical parts, namely particularly a housing 12 and a piston 14. The piston 14 is substantially enclosed by the housing 12 and is reciprocally movable upwards and downwards (with respect to the orientation of Figs. 1 and 2) within the housing 12. The piston 14 is coupled with a foot brake pedal of the foot brake device (the pedal not being shown in Figs. 1 and 2 but as foot brake pedal 5 in Fig. 3). The foot brake pedal may directly or indirectly (e.g. through additional coupling means that are not shown in the drawings) for example be attached at the upper end of the piston 14, for example via a suitable attachment device 16. Thus, the piston 14 can move up and down substantially in conjunction with the movement of the foot brake pedal, i.e. the piston 14 moves downwards upon a depression of the foot brake pedal and moves upwards upon a release of the foot brake pedal.

Within the housing 12 of each of the foot brake modules 10 of Figs. 1 and 2 there is arranged a first spring element 20, here specifically a first coil spring. This first spring element 20 functions to generate a counter force for the foot brake pedal, i.e. a pedal force that can be felt by the driver of the vehicle when activating, i.e. depressing and releasing, the foot brake pedal. Accordingly, the driver must work against this counter force of the spring element 20 upon activation of the foot brake pedal by the driver. Therein, the amount of said counter force is typically substantially proportional to the degree or amount of activation of the foot brake pedal by the driver. That is, said counter force substantially corresponds to the force that must be exerted by the driver to obtain a certain position of the foot brake pedal. Accordingly, said counter force substantially indicates the degree or amount of activation, and thus of the respective position, of the foot brake pedal to the driver.

Consequently, said counter force depends on the physical and technical characteristics of the respectively used spring element. As mentioned above, the spring element, i.e. the counter force generating member, can have a characteristic such that the amount of the generated counter force is linearly or non-linearly or irregularly proportional to the degree or amount of activation of the foot brake pedal by the driver. This includes that said proportionality may be a direct or indirect and/or a progressive or degressive proportionality.

As can be seen in Figs. 1 and 2, the first spring element 20 substantially contacts or bears against the housing 12 with its lower end 22. Thereby, the housing 12 supports and holds the spring element 20. Furthermore, the first spring element 20 substantially contacts or bears against the piston 14 with its other, upper end 24. Particularly, the upper end 24 of the first spring element 20 bears against a downwards facing surface 15 of the piston 14. Thus, when the piston 14 is depressed, i.e. moved downwards, the downwards facing surface 15 of the piston 14 at first engages the upper end 24 of the spring 20.

Figs. 1 and 2 show the piston 14 and the spring element 20 in a relaxed, non-biased, non-depressed position, i.e. in a basic or start position where the foot brake pedal is not depressed. In the embodiment shown in Figs. 1 and 2, in this basic position, a free space or gap 28 exists between the upper end 24 of the spring element 20 and the downwards facing surface 15 of the piston 14. Thus, the spring element 20 (particularly the upper end 24 thereof) and the piston 14 are arranged and configured such that they get in contact and bear against each other only after the piston 14 has been moved for a predetermined distance upon activation of the foot brake pedal, namely for the distance of the gap 28. Accordingly, over this distance of free or idle travel, the piston 14 does not experience any counter force from the spring element 20.

It is to be noted that this latter specific embodiment as shown in Figs. 1 and 2 is not mandatory. Thus, in another embodiment it can be provided that the gap 28 is not existent and that there is an immediate, direct contact between the upper end 24 of the spring element 20 and the downwards facing surface 15 of the piston 14 already in the non-biased start position.

In the embodiments shown in Figs. 1 and 2, besides the first spring element 20, a second spring element 30, 40 is provided within the housing 12 to additionally generate a counter force for the foot brake pedal. Here, the embodiments of Figs. 1 and 2 distinguish in that the second spring element in Fig. 1 specifically is a second coil spring 30, whereas the second spring element in Fig. 2 specifically is a gas spring or gas pressure spring 40.

Referring to Fig. 1, which shows a double spring arrangement, substantially identical or similar to the configuration of the first spring element 20, the second spring element 30 substantially contacts and bears against the housing 12 with its lower end 32 and substantially contacts and bears against the piston 14, particularly the downwards facing surface 15 of the piston 14, with its other, upper end 34. Furthermore, the first and second spring elements 20, 30 are configured such that the first spring element 20 has a larger cross section or diameter than the second spring element 30 which respectively has a smaller cross section or diameter than the first spring element 20. Therein, the first and second spring elements 20, 30 are arranged and further configured such the second spring element 30 is substantially located concentrically within the first spring element 20, i.e. the first spring element 20 substantially encloses the second spring element 30 concentrically.

In the embodiment shown in Fig. 1, the upper end 34 of the second spring element 30 directly contacts the downwards facing surface 15 of the piston 14 already in the shown non-biased start position. However, in another embodiment, as in the case of the first spring element 20 and the associated gap 28 as discussed above, there may a gap between the upper end 34 of the second spring element 30 and the downwards facing surface 15 of the piston 14 in the non-biased start position of the piston 14.

The second spring element 30 may be supported at or towards its lower end 32 by an axial protrusion 13 of the housing 12, the protrusion 13 forming a kind of a center axis for the circular spring element 30. At or towards its upper end 34, the second spring element 30 may be supported by an axial protrusion 17 of the piston 14, the protrusion 17 again forming a kind of a center axis for the circular spring element 30.

As shown in Fig. 1, the protrusion 17 of the piston 14 has a damper element 19 at its axially lower end, e.g. an elastic rubber damper element. Alternatively or additionally, such a damper element may likewise be provided at the axially upper end of the protrusion 13 of the housing 12. This damper element 19 functions to dampen or soften the impact of the protrusion 17 of the piston 14 onto the protrusion 13 of the housing 12 when the foot brake pedal is depressed to its maximum position, the piston 14 thereby being moved downwards to its lowest possible position where a further downwards movement of the piston 14 is stopped by the contact of the protrusion 17 of the piston 14 with the protrusion 13 of the housing 12. In turn, there is a clearance 18 between the axially lower end of the protrusion 17 of the piston 14 and the axially upper end of the protrusion 13 of the housing 12 when the protrusion 17 and the protrusion 13 do not contact each other. Consequently, this clearance 18 has its maximum extension when the foot brake pedal is not at all depressed and is in its non-biased start position.

In the embodiment shown in Fig. 1, the first spring element 20 and the second spring element 30 substantially are connected in parallel with each other, particularly when they are in contact with the piston 14. Other arrangements of the spring elements are likewise conceivable, including their connection in series with each other.

Referring to Fig. 2 where the second spring element specifically is a gas spring or gas pressure spring 40, the second spring element 40 with its lower end 42 again substantially contacts and bears against the housing 12 of the foot brake module 10 and with its other, upper end 44 substantially contacts and bears against the piston 14. Furthermore, the first and second spring elements 20, 40 are configured and arranged such that the first spring element 20 has a larger cross section or diameter than the second spring element 40, wherein the second spring element 40 is substantially located concentrically within the first spring element 20, i.e. the first spring element 20 substantially encloses the second spring element 40 concentrically.

More specifically, in the embodiment shown in Fig. 2, there is provided a spacer element 50 between the housing 12 and the lower end 42 of the gas pressure spring 40. Thus, the gas pressure spring 40 with its lower end 42 actually contacts and bears against said spacer element 50 which in turn contacts and bears against the housing 12. The gas pressure spring 40 encompasses threads 43 and 45 at its both ends 42 and 44. These threads 43, 45 respectively cooperate with corresponding threads in the spacer element 50 and the piston 14 to hold the gas pressure spring 40. With this arrangement, the gas pressure spring 40 may be preassembled as a unit with the piston 14 and the spacer element 50.

As further shown in Figs. 1 and 2, the foot brake module 10 includes a first foot brake sensor 60 and a second foot brake sensor 70. The second foot brake sensor 70 typically is independent of and/or physically isolated from the first foot brake sensor 60 and is configured to operate as a back-up sensor in case of failure of the first foot brake sensor 60. Both said foot brake sensors 60, 70 are configured to determine a respective position of the foot brake pedal upon activation thereof by the driver of the vehicle. Therein, the first foot brake sensor 60 generates a first electric control signal and the second foot brake sensor 70 generates a second electric control signal. Both said first and second electric control signals correspond to said position of the foot brake pedal. By these electric control signals, at least one brake actuator is directly or indirectly activated to eventually brake the vehicle in an amount or with a strength corresponding to the degree of activation of the foot brake pedal by the driver.

In the embodiments shown in Figs. 1 and 2, the first and second foot brake sensors 60, 70 each comprise magnetic sensor means, namely specifically a Hall sensor 62, 72 and a magnetic device 64, 74 which cooperate with each other to generate the first and second electric control signals according to the physical principles of the known Hall effect. Other sensor means and/or sensing principles are likewise conceivable.

Fig. 3 shows a circuitry diagram of the overall foot brake device. In this diagram, the solid lines typically designate analogous electric lines, namely both electric power supply lines as well as electric signal or control lines. The solid lines also designate some pneumatic lines. The dashed lines typically designate digital electric signal or control lines.

In Fig. 3, the foot brake module 10 is coupled with a foot brake pedal 5 which is activated by the driver of the concerned vehicle. The foot brake module 10 comprises the first and second foot brake sensors 60, 70. The first foot brake sensor 60 is connected with the first electronic control device 80 through line A, i.e. the first electric control signal generated by the first foot brake sensor 60 is inputted into the first electronic control device 80. The second foot brake sensor 70 is connected with the second electronic control device or control unit 90 through line B, i.e. the second electric control signal generated by the second foot brake sensor 70 is inputted into the second electronic control device 90.

The first electronic control device 80 is supplied with electrical power from a first power source 85, e.g. a battery, through line C. The second electronic control device 90 is supplied with electrical power from a second power source 95, e.g. a battery, through line D. Furthermore, the first power source 85 supplies electrical power to brake actuators 110, 120 through line E, and the second power source 95 supplies electrical power to brake actuators 130, 140 through line F.

The first electronic control device 80 generates a third electric control signal which is inputted into all four brake actuators 110, 120, 130, 140 through digital signal lines G to control and activate the brake actuators 110, 120, 130, 140 to eventually brake the vehicle in an amount or at a rate corresponding to the degree of activation of the foot brake pedal 5 by the driver.

In an analogous manner, the second electronic control device 90 generates a fourth electric control signal which is inputted into all four brake actuators 110, 120, 130, 140 through digital signal lines H to control and activate the brake actuators 110, 120, 130, 140 to eventually brake the vehicle in an amount or at a rate corresponding to the degree of activation of the foot brake pedal 5 by the driver.

For actually braking the vehicle, each of the brake actuators 110, 120, 130, 140 acts on a respective brake disk 112, 122, 132, 142 which each is associated with a wheel of the vehicle.

The first electronic control device 80 and the second electronic control device 90 may be interlinked with each other by a digital signal line J. This serves an intercommunication between the first electronic control device 80 and the second electronic control device 90 which can act fully equivalent or equally. Thus, it can e.g. be provided that a control can mutually be accomplished either by the first electronic control device 80 and/or the second electronic control device 90.

Furthermore, an additional input interface 150 may be provided for activation by the driver of the vehicle, the input interface 150 for example being connected with the first electronic control device 80 through line K. A corresponding connection can also be given between the input interface 150 and the second electronic control device 90. The input interface 150 may be configured to enable additional driving and/or braking modes and/or braking means for the vehicle, particularly enabling a one pedal driving mode and/or comprising a deceleration actuator. Said one pedal driving mode and/or said deceleration actuator may particularly be configured to enable a permanent braking mode and/or a motor braking mode and/or a retardation mode for the vehicle.

Further options with respect to input interface 150 may be the provision of braking by means of an electric engine functioning as a generator; the provision of a retarder as a further braking device, wherein the input interface can comprise a retarder lever; and braking by normal friction brakes which are activated and/or controlled by the above mentioned input interface. In case of one pedal driving, the input interface generally also can comprise a driving pedal.

Furthermore, the first electronic control device 80 and the second electronic control device 90 may be connected with a trailer coupling device 160 through lines M and N. While the primary vehicle (e.g. a truck), which comprises the overall foot brake device as shown in Fig. 3, may be a purely electric vehicle and/or a vehicle which does not comprise a pneumatic braking system, a trailer of this vehicle may be a conventional trailer, i.e. a trailer which still is operated with a pneumatic braking system. In order to supply the trailer with pressurized air for the pneumatic braking system, the primary vehicle (truck) may encompass a pressurized air tank 162 which may e.g. be filled and operated by an electric compressor which produces pressurized air. Such pressurized air is then supplied from the tank 162 to the trailer through pneumatic lines P and Q and trailer coupling valves 164 at the trailer coupling device 160.

### LIST OF REFERENCE SIGNS

- 5: foot brake pedal
- 10: foot brake module
- 12: housing
- 13: axial protrusion of housing
- 14: piston
- 15: downwards facing surface of piston
- 16: attachment device
- 17: axial protrusion of piston 14
- 18: clearance
- 19: damper element
- 20: first spring element, first coil spring
- 22: lower end of first spring element
- 24: upper end of first spring element
- 28: gap
- 30: second spring element, second coil spring
- 32: lower end of second spring element
- 34: upper end of second spring element
- 40: second spring element, gas pressure spring
- 42: lower end of second spring element
- 43: threads
- 44: upper end of second spring element
- 45: threads
- 50: spacer element
- 60: first foot brake sensor
- 62: Hall sensor
- 64: magnetic device
- 70: second foot brake sensor
- 72: Hall sensor
- 74: magnetic device
- 80: first electronic control device
- 85: first power source, battery
- 90: second electronic control device
- 95: second power source, battery
- 110: brake actuator
- 112: brake disk
- 120: brake actuator
- 122: brake disk
- 130: brake actuator
- 132: brake disk
- 140: brake actuator
- 142: brake disk
- 150: input interface
- 160: trailer coupling device
- 162: pressurized air tank
- 164: trailer coupling valves
- A ... N: electric lines
- P, Q: pneumatic lines

## Claims

1. Foot brake device for vehicles, particularly utility vehicles or commercial vehicles, comprising:
- a foot brake pedal (5) for activation by the driver of the vehicle,
- a first foot brake sensor (60) being coupled with the foot brake pedal (5), wherein the first foot brake sensor (60) is configured to determine a respective position of the foot brake pedal (5) upon activation of the foot brake pedal (5) by the driver, and wherein the first foot brake sensor (60) is configured to generate a first electric control signal corresponding to said position of the foot brake pedal (5),
- at least one member (20, 30, 40) which is configured to generate a physical counter force against which the foot brake pedal (5) must work upon its activation by the driver, wherein the amount of said counter force is substantially proportional to the degree of activation of the foot brake pedal (5) by the driver and indicates the degree of activation of the foot brake pedal (5) to the driver,
- a second foot brake sensor (70) being coupled with the foot brake pedal (5), wherein the second foot brake sensor (70) is configured to determine a respective position of the foot brake pedal (5) upon activation of the foot brake pedal (5) by the driver, and wherein the second foot brake sensor (70) is configured to generate a second electric control signal corresponding to said position of the foot brake pedal (5), and
- a first electronic control device (80), wherein the first electric control signal generated by the first foot brake sensor (60) is received by the first electronic control device (80), and wherein the first electronic control device (80) is configured to generate a third electric control signal which activates at least one brake actuator (110, 120, 130, 140) to brake the vehicle in an amount corresponding to the degree of activation of the foot brake pedal (5) by the driver,
**characterized by**
- a second electronic control device (90), wherein the second electric control signal generated by the second foot brake sensor (70) is received by the second electronic control device (90), and wherein the second electronic control device (90) is configured to generate a fourth electric control signal which activates at least one brake actuator (110, 120, 130, 140) to brake the vehicle in an amount corresponding to the degree of activation of the foot brake pedal (5) by the driver.

2. Foot brake device according to claim 1, wherein the at least one member (20, 30, 40) which generates said counter force for the foot brake pedal (5) has a characteristic such that the amount of the generated counter force is substantially linearly or non-linearly or irregularly proportional to the degree of activation of the foot brake pedal (5) by the driver.

3. Foot brake device according to claim 1 or 2, wherein the at least one member (20, 30, 40) which generates said counter force for the foot brake pedal (5) comprises at least one of the following: a spring element, in particular a mechanical spring, particularly a spiral spring, a coil spring or a leaf spring, a gas pressure spring, and/or a damping element, in particular a hydraulic damper or a rubber damper.

4. Foot brake device according to claim 3,
- wherein at least two of a spring element and/or a damping element are connected in series and/or in parallel with each other, and/or
- wherein the foot brake pedal (5) and the at least one spring element and/or the at least one damping element are configured and arranged such that the foot brake pedal (5) upon its activation by the driver contacts one or more of the at least one spring element and/or the at least one damping element only after having been moved for a predetermined distance (28).

5. Foot brake device according to claim 3 or 4, wherein two members for generating a counter force for the foot brake pedal (5) are provided comprising a first spring element (20) and a second spring element (30, 40) with different characteristics.

6. Foot brake device according to claim 1, wherein the second foot brake sensor (70) is independent of the first foot brake sensor (60) and is in particular configured to operate as a back-up sensor in case of failure of the first foot brake sensor (60).

7. Foot brake device according to claim 1 or 6, wherein the first electric control signal generated by the first foot brake sensor (60) and/or the second electric control signal generated by the second foot brake sensor (70) activate at least one brake actuator (110, 120, 130, 140) to brake the vehicle in an amount corresponding to the degree of activation of the foot brake pedal (5) by the driver.

8. Foot brake device according to any one of the preceding claims, wherein the first foot brake sensor (60) and/or the second foot brake sensor (70) comprise magnetic and/or inductive and/or capacitive and/or optical sensor means to generate the first and/or second electric control signal.

9. Foot brake device according to claim 8, wherein the first foot brake sensor (60) and/or the second foot brake sensor (70) comprises a Hall sensor (62, 72) which cooperates with a magnetic device (64, 74) to generate the first and/or second electric control signal.

10. Foot brake device according to any one of claims 3 to 9, comprising:
- a housing (12),
- a piston (14) being coupled with the foot brake pedal (5) and being reciprocally movable within the housing (12) in conjunction with the movement of the foot brake pedal (5), and
- at least a first spring element (20) to generate a counter force for the foot brake pedal (5), the first spring element (20) being arranged within the housing (12), the first spring element (20) with its one end (22) substantially bearing against the housing (12) and with its other end (24) substantially bearing against the piston (14).

11. Foot brake device according to claim 10, comprising:
- a second spring element (30, 40) to generate a counter force for the foot brake pedal (5), the second spring element (30, 40) being arranged within the housing (12), the second spring element (30, 40) with its one end (32, 42) substantially bearing against the housing (12) and with its other end (34, 44) substantially bearing against the piston (14),
- wherein the first and second spring elements (20, 30, 40) are configured and arranged such that the first spring element (20) has a larger diameter and the second spring element (30, 40) has a smaller diameter and that the second spring element (30, 40) is arranged substantially within the first spring element (20).

12. Foot brake device according to claim 10 or 11, wherein the first spring element is a first coil spring (20), and wherein the second spring element is a second coil spring (30) or a gas pressure spring (40).

13. Foot brake device according to any one of claims 10 to 12, wherein the first spring element (20) and/or the second spring element (30) are configured such that they bear against the piston (14) with their respective other end (24, 34) only after the piston (14) has been moved for a predetermined distance (28) upon activation of the foot brake pedal (5) by the driver.

14. Brake system for vehicles, particularly utility vehicles or commercial vehicles, comprising a foot brake device according to any one of the preceding claims.

15. Brake system according to claim 14, comprising:
- an input interface (150) for activation by the driver of the vehicle, said input interface (150) being configured to enable additional driving and/or braking modes and/or braking means for the vehicle, particularly enabling a one pedal driving mode and/or comprising a deceleration actuator, said one pedal driving mode and/or said deceleration actuator particularly enabling a permanent braking mode and/or a motor braking mode and/or a retardation mode for the vehicle.

16. Vehicle, particularly utility vehicle or commercial vehicle, comprising a foot brake device according to any one of claims 1 to 13 and/or a brake system according to claim 14 or 15.

## Patentansprüche

1. Fußbremsvorrichtung für Fahrzeuge, insbesondere Nutzfahrzeuge oder gewerbliche Fahrzeuge, umfassend:
- ein Fußbremspedal (5) zur Aktivierung durch den Fahrer des Fahrzeugs,
- einen ersten Fußbremssensor (60), der mit dem Fußbremspedal (5) gekoppelt ist, wobei der erste Fußbremssensor (60) so konfiguriert ist, dass er bei Aktivierung des Fußbremspedals (5) durch den Fahrer eine jeweilige Stellung des Fußbremspedals (5) bestimmt, und wobei der erste Fußbremssensor (60) so konfiguriert ist, dass er ein erstes elektrisches Steuersignal erzeugt, das der Stellung des Fußbremspedals (5) entspricht,
- mindestens ein Glied (20, 30, 40), das so konfiguriert ist, dass es eine physikalische Gegenkraft erzeugt, gegen die das Fußbremspedal (5) bei seiner Aktivierung durch den Fahrer anarbeiten muss, wobei der Betrag der Gegenkraft im Wesentlichen proportional zum Grad der Aktivierung des Fußbremspedals (5) durch den Fahrer ist, und dem Fahrer den Grad der Aktivierung des Fußbremspedals (5) angibt,
- einen zweiten Fußbremssensor (70), der mit dem Fußbremspedal (5) gekoppelt ist, wobei der zweite Fußbremssensor (70) so konfiguriert ist, dass er bei Aktivierung des Fußbremspedals (5) durch den Fahrer eine jeweilige Stellung des Fußbremspedals (5) bestimmt, und wobei der zweite Fußbremssensor (70) so konfiguriert ist, dass er ein zweites elektrisches Steuersignal erzeugt, das der Stellung des Fußbremspedals (5) entspricht, und
- eine erste elektronische Steuervorrichtung (80), wobei das erste elektrische Steuersignal, das vom ersten Fußbremssensor (60) erzeugt wird, von der ersten elektronischen Steuervorrichtung (80) empfangen wird, und wobei die erste elektronische Steuervorrichtung (80) so konfiguriert ist, dass sie ein drittes elektrisches Steuersignal erzeugt, das mindestens einen Bremsaktuator (110, 120, 130, 140) aktiviert, um das Fahrzeug um einen Betrag abzubremsen, der dem Grad der Aktivierung des Fußbremspedals (5) durch den Fahrer entspricht,
**gekennzeichnet durch**
- eine zweite elektronische Steuervorrichtung (90), wobei das zweite elektrische Steuersignal, das vom zweiten Fußbremssensor (70) erzeugt wird, von der zweiten elektronischen Steuervorrichtung (90) empfangen wird, und wobei die zweite elektronische Steuervorrichtung (90) so konfiguriert ist, dass sie ein viertes elektrisches Steuersignal erzeugt, das mindestens einen Bremsaktuator (110, 120, 130, 140) aktiviert, um das Fahrzeug um einen Betrag abzubremsen, der dem Grad der Aktivierung des Fußbremspedals (5) durch den Fahrer entspricht.

2. Fußbremsvorrichtung nach Anspruch 1, wobei das mindestens eine Glied (20, 30, 40), das die Gegenkraft für das Fußbremspedal (5) erzeugt, eine solche Eigenschaft aufweist, dass der Betrag der erzeugten Gegenkraft im Wesentlichen linear oder nichtlinear oder unregelmäßig proportional zum Grad der Aktivierung des Fußbremspedals (5) durch den Fahrer ist.

3. Fußbremsvorrichtung nach Anspruch 1 oder 2, wobei das mindestens eine Glied (20, 30, 40), das die Gegenkraft für das Fußbremspedal (5) erzeugt, mindestens eines der Folgenden umfasst: ein Federelement, insbesondere eine mechanische Feder, besonders eine Spiralfeder, eine Schraubenfeder oder eine Blattfeder, eine Gasdruckfeder, und/oder ein Dämpfungselement, insbesondere einen hydraulischen Dämpfer oder einen Gummidämpfer.

4. Fußbremsvorrichtung nach Anspruch 3,
- wobei mindestens zwei aus einem Federelement und/oder einem Dämpfungselement in Reihe und/oder parallel zueinander verbunden sind, und/oder
- wobei das Fußbremspedal (5) und das mindestens eine Federelement und/oder das mindestens eine Dämpfungselement derart konfiguriert und angeordnet sind, dass das Fußbremspedal (5) bei seiner Aktivierung durch den Fahrer eines oder mehrere des mindestens einen Federelements und/oder des mindestens einen Dämpfungselements erst berührt, nachdem es um eine vorbestimmte Strecke (28) bewegt wurde.

5. Fußbremsvorrichtung nach Anspruch 3 oder 4, wobei zwei Glieder zum Erzeugen einer Gegenkraft für das Fußbremspedal (5) vorgesehen sind, die ein erstes Federelement (20) und ein zweites Federelement (30, 40) mit unterschiedlichen Eigenschaften umfassen.

6. Fußbremsvorrichtung nach Anspruch 1, wobei der zweite Fußbremssensor (70) vom ersten Fußbremssensor (60) unabhängig ist und insbesondere so konfiguriert ist, dass er im Falle eines Ausfalls des ersten Fußbremssensors (60) als Ersatzsensor wirkt.

7. Fußbremsvorrichtung nach Anspruch 1 oder 6, wobei das erste elektrische Steuersignal, das vom ersten Fußbremssensor (60) erzeugt wird, und/oder das zweite elektrische Steuersignal, das vom zweiten Fußbremssensor (70) erzeugt wird, mindestens einen Bremsaktuator (110, 120, 130, 140) aktivieren, um das Fahrzeug um einen Betrag abzubremsen, der dem Grad der Aktivierung des Fußbremspedals (5) durch den Fahrer entspricht.

8. Fußbremsvorrichtung nach einem der vorstehenden Ansprüche, wobei der erste Fußbremssensor (60) und/oder der zweite Fußbremssensor (70) magnetische und/oder induktive und/oder kapazitive und/oder optische Sensormittel umfassen, um das erste und/oder das zweite elektrische Steuersignal zu erzeugen.

9. Fußbremsvorrichtung nach Anspruch 8, wobei der erste Fußbremssensor (60) und/oder der zweite Fußbremssensor (70) einen Hall-Sensor (62, 72) umfassen, der mit einer magnetischen Vorrichtung (64, 74) zusammenwirkt, um das erste und/oder das zweite elektrische Steuersignal zu erzeugen.

10. Fußbremsvorrichtung nach einem der Ansprüche 3 bis 9, umfassend:
- ein Gehäuse (12),
- einen Kolben (14), der mit dem Fußbremspedal (5) gekoppelt ist und in Zusammenspiel mit der Bewegung des Fußbremspedals (5) innerhalb des Gehäuses (12) hin- und herbewegt werden kann, und
- mindestens ein erstes Federelement (20), um eine Gegenkraft für das Fußbremspedal (5) zu erzeugen, wobei das erste Federelement (20) innerhalb des Gehäuses (12) angeordnet ist, wobei das erste Federelement (20) mit seinem einen Ende (22) im Wesentlichen am Gehäuse (12) anliegt und mit seinem anderen Ende (24) im Wesentlichen am Kolben (14) anliegt.

11. Fußbremsvorrichtung nach Anspruch 10, umfassend:
- ein zweites Federelement (30, 40), um eine Gegenkraft für das Fußbremspedal (5) zu erzeugen, wobei das zweite Federelement (30, 40) innerhalb des Gehäuses (12) angeordnet ist, wobei das zweite Federelement (30, 40) mit seinem einen Ende (32, 42) im Wesentlichen am Gehäuse (12) anliegt und mit seinem anderen Ende (34, 44) im Wesentlichen am Kolben (14) anliegt,
- wobei das erste und das zweite Federelement (20, 30, 40) derart konfiguriert und angeordnet sind, dass das erste Federelement (20) einen größeren Durchmesser aufweist und das zweite Federelement (30, 40) einen kleineren Durchmesser aufweist, und dass das zweite Federelement (30, 40) im Wesentlichen innerhalb des ersten Federelements (20) angeordnet ist.

12. Fußbremsvorrichtung nach Anspruch 10 oder 11, wobei das erste Federelement eine erste Schraubenfeder (20) ist und wobei das zweite Federelement eine zweite Schraubenfeder (30) oder eine Gasdruckfeder (40) ist.

13. Fußbremsvorrichtung nach einem der Ansprüche 10 bis 12, wobei das erste Federelement (20) und/oder das zweite Federelement (30) derart konfiguriert sind, dass sie mit ihrem jeweiligen anderen Ende (24, 34) erst dann am Kolben (14) anliegen, nachdem der Kolben (14) bei Aktivierung des Fußbremspedals (5) durch den Fahrer um eine vorbestimmte Strecke (28) bewegt wurde.

14. Bremssystem für Fahrzeuge, insbesondere Nutzfahrzeuge oder gewerbliche Fahrzeuge, das eine Fußbremsvorrichtung nach einem der vorstehenden Ansprüche umfasst.

15. Bremssystem nach Anspruch 14, umfassend:
- eine Eingabeschnittstelle (150) zur Aktivierung durch den Fahrer des Fahrzeugs, wobei die Eingabeschnittstelle (150) so konfiguriert ist, dass sie zusätzliche Fahr- und/oder Bremsmodi und/oder Bremsmittel für das Fahrzeug ermöglicht, die insbesondere einen Ein-Pedal-Fahrmodus ermöglichen und/oder einen Verlangsamungsaktuator umfassen, wobei der Ein-Pedal-Fahrmodus und/oder der Verlangsamungsaktuator insbesondere einen Dauerbremsmodus und/oder einen Motorbremsmodus und/oder einen Verzögerungsmodus für das Fahrzeug ermöglichen.

16. Fahrzeug, insbesondere Nutzfahrzeug oder gewerbliches Fahrzeug, das eine Fußbremsvorrichtung nach einem der Ansprüche 1 bis 13 und/oder ein Bremssystem nach Anspruch 14 oder 15 umfasst.

## Revendications

1. Dispositif de frein au pied pour véhicules, en particulier pour véhicules utilitaires ou véhicules commerciaux, comprenant :
- une pédale de frein au pied (5) destinée à être actionnée par le conducteur du véhicule,
- un premier capteur de frein au pied (60) étant couplé à la pédale de frein au pied (5), dans lequel le premier capteur de frein au pied (60) est configuré pour déterminer une position respective de la pédale de frein au pied (5) lors d'un actionnement de la pédale de frein au pied (5) par le conducteur, et dans lequel le premier capteur de frein au pied (60) est configuré pour générer un premier signal de commande électrique correspondant à ladite position de la pédale de frein au pied (5),
- au moins un élément (20, 30, 40) qui est configuré pour générer une contre-force physique contre laquelle la pédale de frein au pied (5) doit agir lors de son actionnement par le conducteur, dans lequel la quantité de ladite contre-force est sensiblement proportionnelle au degré d'actionnement de la pédale de frein au pied (5) par le conducteur et indique le degré d'actionnement de la pédale de frein au pied (5) au conducteur,
- un second capteur de frein au pied (70) étant couplé à la pédale de frein au pied (5), dans lequel le second capteur de frein au pied (70) est configuré pour déterminer une position respective de la pédale de frein au pied (5) lors d'un actionnement de la pédale de frein au pied (5) par le conducteur, et dans lequel le second capteur de frein au pied (70) est configuré pour générer un deuxième signal de commande électrique correspondant à ladite position de la pédale de frein au pied (5), et
- un premier dispositif de commande électronique (80), dans lequel le premier signal de commande électrique généré par le premier capteur de frein au pied (60) est reçu par le premier dispositif de commande électronique (80), et dans lequel le premier dispositif de commande électronique (80) est configuré pour générer un troisième signal de commande électrique qui actionne au moins un cylindre de frein (110, 120, 130, 140) pour freiner le véhicule selon une quantité correspondant au degré d'actionnement de la pédale de frein au pied (5) par le conducteur,
**caractérisé par**
- un second dispositif de commande électronique (90), dans lequel le deuxième signal de commande électrique généré par le second capteur de frein au pied (70) est reçu par le second dispositif de commande électronique (90), et dans lequel le second dispositif de commande électronique (90) est configuré pour générer un quatrième signal de commande électrique qui actionne au moins un cylindre de frein (110, 120, 130, 140) pour freiner le véhicule selon une quantité correspondant au degré d'actionnement de la pédale de frein au pied (5) par le conducteur.

2. Dispositif de frein au pied selon la revendication 1, dans lequel le au moins un élément (20, 30, 40) qui génère ladite contre-force destinée à la pédale de frein au pied (5) présente une caractéristique telle que la quantité de la contre-force générée est proportionnelle de manière sensiblement linéaire, non linéaire ou irrégulière au degré d'actionnement de la pédale de frein au pied (5) par le conducteur.

3. Dispositif de frein au pied selon la revendication 1 ou 2, dans lequel le au moins un élément (20, 30, 40) qui génère ladite contre-force destinée à la pédale de frein au pied (5) comprend au moins l'un des éléments suivants : un élément ressort, en particulier un ressort mécanique, plus particulièrement un ressort en spirale, un ressort hélicoïdal ou un ressort à lames, un ressort pneumatique et/ou un élément d'amortissement, en particulier un amortisseur hydraulique ou un amortisseur en caoutchouc.

4. Dispositif de frein au pied selon la revendication 3,
- dans lequel au moins deux parmi un élément ressort et/ou un élément d'amortissement sont raccordés l'un à l'autre en série et/ou en parallèle, et/ou
- dans lequel la pédale de frein au pied (5) et le au moins un élément ressort et/ou le au moins un élément d'amortissement sont configurés et agencés de telle sorte que la pédale de frein au pied (5), lors de son actionnement par le conducteur, entre en contact avec un ou plusieurs du au moins un élément ressort et/ou du au moins un élément d'amortissement seulement après avoir été déplacée d'une distance prédéterminée (28).

5. Dispositif de frein au pied selon la revendication 3 ou 4, dans lequel sont fournis deux éléments destinés à générer une contre-force destinée à la pédale de frein au pied (5), comprenant un premier élément ressort (20) et un second élément ressort (30, 40) avec des caractéristiques différentes.

6. Dispositif de frein au pied selon la revendication 1, dans lequel le second capteur de frein au pied (70) est indépendant du premier capteur de frein au pied (60) et est en particulier configuré pour faire office de capteur de secours en cas de défaillance du premier capteur de frein au pied (60).

7. Dispositif de frein au pied selon la revendication 1 ou 6, dans lequel le premier signal de commande électrique généré par le premier capteur de frein au pied (60) et/ou le deuxième signal de commande électrique généré par le second capteur de frein au pied (70) actionnent au moins un cylindre de frein (110, 120, 130, 140) pour freiner le véhicule selon une quantité correspondant au degré d'actionnement de la pédale de frein au pied (5) par le conducteur.

8. Dispositif de frein au pied selon l'une quelconque des revendications précédentes, dans lequel le premier capteur de frein au pied (60) et/ou le second capteur de frein au pied (70) comprennent un moyen formant capteur magnétique et/ou inductif et/ou capacitif et/ou optique destiné à générer le premier signal de commande électrique et/ou le deuxième signal de commande électrique.

9. Dispositif de frein au pied selon la revendication 8, dans lequel le premier capteur de frein au pied (60) et/ou le second capteur de frein au pied (70) comprennent un capteur à effet Hall (62, 72) qui coopère avec un dispositif magnétique (64, 74) pour générer le premier signal de commande électrique et/ou le deuxième signal de commande électrique.

10. Dispositif de frein au pied selon l'une quelconque des revendications 3 à 9, comprenant :
- un boîtier (12),
- un piston (14) étant couplé à la pédale de frein au pied (5) et pouvant se déplacer en va-et-vient à l'intérieur du boîtier (12) en association avec le déplacement de la pédale de frein au pied (5), et
- au moins un premier élément ressort (20) pour générer une contre-force destinée à la pédale de frein au pied (5), le premier élément ressort (20) étant agencé à l'intérieur du boîtier (12), le premier élément ressort (20) présentant sa première extrémité (22) sensiblement en appui contre le boîtier (12) et son autre extrémité (24) sensiblement en appui contre le piston (14).

11. Dispositif de frein au pied selon la revendication 10, comprenant :
- un second élément ressort (30, 40) pour générer une contre-force destinée à la pédale de frein au pied (5), le second élément ressort (30, 40) étant agencé à l'intérieur du boîtier (12), le second élément ressort (30, 40) présentant sa première extrémité (32, 42) sensiblement en appui contre le boîtier (12) et son autre extrémité (34, 44) sensiblement en appui contre le piston (14),
- dans lequel les premier et second éléments ressorts (20, 30, 40) sont configurés et agencés de telle sorte que le premier élément ressort (20) présente un diamètre supérieur et le second élément ressort (30, 40) présente un diamètre inférieur et que le second élément ressort (30, 40) soit agencé sensiblement à l'intérieur du premier élément ressort (20).

12. Dispositif de frein au pied selon la revendication 10 ou 11, dans lequel le premier élément ressort est un premier ressort hélicoïdal (20) et dans lequel le second élément ressort est un second ressort hélicoïdal (30) ou un ressort pneumatique (40).

13. Dispositif de frein au pied selon l'une quelconque des revendications 10 à 12, dans lequel le premier élément ressort (20) et/ou le second élément ressort (30) sont configurés de telle sorte qu'ils viennent en appui contre le piston (14) avec leur autre extrémité respective (24, 34) seulement après que le piston (14) a été déplacé d'une distance prédéterminée (28) lors d'un actionnement de la pédale de frein au pied (5) par le conducteur.

14. Système de frein pour véhicules, en particulier pour véhicules utilitaires ou véhicules commerciaux, comprenant un dispositif de frein au pied selon l'une quelconque des revendications précédentes.

15. Système de frein selon la revendication 14, comprenant :
- une interface d'entrée (150) destinée à être actionnée par le conducteur du véhicule, ladite interface d'entrée (150) étant configurée pour activer des modes de conduite et/ou de freinage et/ou des moyens de freinage supplémentaires pour le véhicule, ce qui active en particulier un mode de conduite à une seule pédale et/ou comprenant un actionneur de décélération, ledit mode de conduite à une seule pédale et/ou ledit actionneur de décélération activant en particulier un mode de freinage permanent et/ou un mode de freinage moteur et/ou un mode ralentissement pour le véhicule.

16. Véhicule, en particulier véhicule utilitaire ou véhicule commercial, comprenant un dispositif de frein au pied selon l'une quelconque des revendications 1 à 13 et/ou un système de frein selon la revendication 14 ou 15.
